# EUROPÄISCHE PATENTSCHRIFT

(11) **EP 0 490 160 B1**
(45) Veröffentlichungstag und Bekanntmachung des Hinweises auf die Patenterteilung: **02.11.1994**
(21) Anmeldenummer: 91120119.2
(22) Anmeldetag: 26.11.1991
(51) Int. Cl.: C04B 28/14

(54) **Verfahren zum Herstellen von Gipsbaustoffen**
Process for manufacturing gypsum building materials
Procédé de fabrication de matériaux de construction à base de plâtre

(30) Priorität: 10.12.1990 DE 4039319
(43) Veröffentlichungstag der Anmeldung: 17.06.1992
(73) Patentinhaber: SICOWA Verfahrenstechnik für Baustoffe GmbH & Co. KG, D-52072 Aachen (DE)
(72) Erfinder: Koslowski, Thomas, Dr., W-5100 Aachen (DE); Hessler, Klaus Michael, W-5120 Herzogenrath 3 (DE); Musebrink, Olaf, W-5132 Übach-Palenberg (DE); Kieker, Joachim, W-5144 Wegberg (DE)
(74) Vertreter: Sparing Röhl Henseler Patentanwälte

(56) Entgegenhaltungen:
- EP-A- 0 446 693
- DE-A- 3 204 908
- FR-A- 2 486 928
- GB-A- 696 169
- GB-A- 1 437 040
- US-A- 3 359 146
- CHEMICAL ABSTRACTS, vol. 103, no. 24, 16. Dezember 1985, Columbus, Ohio, US;abstract no. 200126C, Seite 265 ; & SU-A-1 164 227 (SCIENTIFIC RESEARCH LAB. OF PHYSICAL-CHEMICAL MECHANICS OF MATERIALS AND TECHNOGICAL PROCESSES) 30. Juni 1985

## Beschreibung

Die Erfindung betrifft ein Verfahren zum Herstellen von leichtgewichtigen, mit einer Porenstruktur versehenen, platten- oder blockförmigen Gipsbaustoffen, insbesondere Wandbauplatten, wobei Calciumsulfat-Alphahalbhydrat, Wasser in einer etwas überstöchiometrischen Menge und gegebenenfalls Abbindeverzögerer und/oder -beschleuniger für Gips und Additive unter Bildung einer gießfähigen Aufschlämmung gemischt und einer geeigneten Formgebung unterworfen werden.

Aus der DE- A-1 571 575 ist ein derartiges Verfahren zur Herstellung von Gipsbaustoffen bekannt, bei dem als Gips ungemahlenes Calciumsulfat-Alphahalbhydrat verwendet wird, mit dem eine gießfähige Aufschlämmung gebildet wird, der Calciumcarbonat zugesetzt wird, das mit Schwefelsäure zur Erzeugung von Kohlendioxid umgesetzt wird. Die so in der Aufschlämmung erzeugten Gasbläschen führen zu einer Porenstruktur im fertigen Produkt. Eine derartige Gasbläschenerzeugung in der Aufschlämmung führt aber zu Problemen hinsichtlich einer gleichmäßigen Verteilung hiervon über den Querschnitt, zumal die Gasbläschen zum Aufsteigen und die Gipsteilchen zum Sedimentieren neigen, so daß die Qualität der hergestellten Gasgipsprodukte beeinträchtigt wird. Um dieses Problem zu reduzieren, erfolgt die Zugabe der Schwefelsäure unmittelbar vor dem Vergießen, so daß sich die Gasbläschen im wesentlichen in der vergossenen Aufschlämmung ausbilden, die somit in der Form expandiert. - Außerdem wird darauf verwiesen, daß vorgeformte Schäume in diesem Zusammenhang keine guten Ergebnisse liefern, da diese das Abbinden verzögern und dadurch selbst Zeit zum Zusammenfallen haben sowie die Viskosität beeinträchtigt wird.

Gemäß der DE -A-2 442 021 wird als Gips Anhydrit verwendet, während Gas in der erzeugten Aufschlämmung durch katalytische Zersetzung von Wasserstoffperoxid erzeugt wird. Die porosierte Aufschlämmung wird vor Erreichen der maximalen Expansion in Formen gegossen. Abgesehen davon, daß Anhydrit nicht zu so hohen Festigkeiten wie Calciumsulfat-Alphahalbhydrat führt, ergeben sich hierbei ebenfalls Probleme durch Aufsteigen von Gasbläschen und Sedimention von Gipsteilchen.

Außerdem ist es aus der DE-A-2 546 181 bekannt, einer Aufschlämmung aus Gips, Wasser und Zusätzen in Gegenwart eines schaumstabilisierenden Zusatzes ein Schäummittel zuzugeben und aufzuschäumen. Ein derartiges Aufschäumen führt aber zu keiner im wesentlichen einheitlichen und keiner einhaltbaren mittleren Schaumporengröße, sondern diese Größen schwanken in einem weiten Bereich, so gibt es Poren von Lunkergröße bis zu Feinporen, wodurch die Dichte und Qualität der hergestellten Schaumgipsprodukt beeinträchtigt werden.

Aus der DE -A 2-740 018 ist es bekannt, Calciumsulfat-Alphahalbhydrat zusammen mit einem Anteil Dihydrat zu verwenden und unter Verwendung eines zugesetzten Schaumbildners die Aufschlämmung aufzuschäumen, wobei das Dihydrat ein Zusammenwachsen von Schaumblasen verhindern soll. Da der Schaum aber in der Aufschlämmung erzeugt wird, läßt sich keine gut definierte Porengröße und Porenmenge einstellen, so daß die Endprodukte entsprechende Dichte- und Qualitätsschwankungen aufweisen.

Aus der DE-A- 2 548 912 ist es bekannt, einen wässrigen Tensidschaum mit komplizierter Struktur infolge Verwendung von zusätzlich zum Tensid verwendeten Chemikalien in einem Mischer herzustellen, dem dann Gips etwa in Form von Halbhydraten zugegeben wird. Die zusätzlichen Chemikalien sollen zur Schaumstabilisierung dienen.

Die GB-A-1 437 040 betrifft die Herstellung von faserverstärkten Gipsprodukten, wobei letztere aus Alpha- und Betahalbhydrat (50/50) hergestellt sein können. Hierbei wird ein vorgefertigter Schaum mit nicht näher definierten Eigenschaften der mit Wasser angemachten Aufschlämmung beigemischt, der die Fließfähigkeit der Aufschlämmung und damit deren Wasserbedarf herabsetzen soll und gleichzeitig eine Herabsetzung der Rohdichte der Gipsprodukte bewirkt. Die Verstärkungsfasern werden in einer Menge von 2 bis 10 Gew.-% der durch den Schaum verflüssigten Aufschlämmung zugegeben. Sedimentationsprobleme, bewirkt durch das Aufsteigen von Schaumbläschen, die zu entsprechenden Dichteschwankungen und damit zu unterschiedlichen Produkteigenschaften im gleichen Produkt oder von Produkt zu Produkt führen, werden hierbei durch den Faserzusatz praktisch verhindert, da die Fasern die Schaumbläschen relativ gut fixieren und am Aufsteigen und gegebenenfalls am Sichvereinigen hindern. Wenn dagegen keine Verstärkungsfasern verwendet werden, ergeben sich die genannten Sedimentationsprobleme.

Entsprechendes gilt für "Chemical Abstracts", vol. 123, no. 24, wo ebenfalls nur faserverstärkte Gipsprodukte angesprochen werden, wobei im übrigen kein fertiger Schaum, sondern ein Schäumungsmittel zugesetzt wird.

Aufgabe der Erfindung ist es, ein Verfahren der eingangs genannten Art zu schaffen, mit dem leichte Gipsbaustoffe mit möglichst gleichmäßig ver`teilten Luftporen von im wesentlichen gleichbleibender Größe bei hoher Festigkeit und vorbestimmter Rohdichte der Produkte hergestellt werden können.

Diese Aufgabe wird dadurch gelöst, daß gemahlenes Calciumsulfat-Alphahalbhydrat mit einer spezifischen Oberfläche nach Blaine größer 2000 cm²/g gegebenenfalls zusammen mit Calciumsulfat-Betahalbhydrat in einer Menge bis etwa 30 Gew.-% bezogen auf das Calciumsulfat-Alphahalbhydrat sowie ein vorgefertigter Tensidschaum mit einer definierten Rohdichte im Bereich von 40 bis 80 kg/m³ und mit gleichmäßiger, definierter Porengröße, im Bereich von 100 bis 500 µm, der der Aufschlämmung vor der Formgebung in einer Menge zur Einstellung einer definierten Rohdichte des Gipsbaustoffs im Bereich von 300 bis 1200 kg/m³ beigemischt wird, zur Herstellung der faserfreien Aufschlämmung verwendet werden.

Die Verwendung von gemahlenem Calciumsulfat-Alphahalbhydrat mit einer spezifischen Oberfläche nach Blaine größer 2000 cm²/g, vorzugsweise etwa 3000 bis 4000 cm²/g, führt zu einer genügend hohen Reaktionsfähigkeit des Gipses und zu Teilchengrößen, die die Verwendung eines vorgefertigten Tensidschaums ermöglichen, der mit definierter Rohdichte im Bereich von 40 bis 80 kg/m³ und praktisch gleichmäßiger, definierter Porengröße (die Porendurchmesser besitzen eine relativ schmale Gaußverteilung) hergestellt und mit der Aufschlämmung vor dem Vergießen vermischt wird, ohne daß stabilisierende Zusätze notwendig sind und ohne daß die Gefahr besteht, daß der Schaum zu frühzeitig zusammenfällt oder zerdrückt wird. Außerdem werden durch die Vermahlung des hohe Endfestigkeiten bewirkenden Calciumsulfat-Alphahalbhydrats Sedimentations- und Thixotropieeffekte ausgeschaltet. Die zugegebene Schaummenge richtet sich nach der gewünschten Rohdichte der Endprodukte, die hierdurch auf einen gewünschten Wert im Bereich von 300 bis 1200 kg/m³, vorzugsweise 400 bis 800 kg/m³, insbesondere 500 bis 600 kg/m³, ausgehend vom Feststoffgehalt, dem zum Abbinden notwendigen Wasser und der entsprechenden Schaummenge eingestellt wird, da das Verfahren eine exakte Dosierung ermöglicht. Es ergeben sich homogene Produkte guter und gleichmäßiger Festigkeit und vorbestimmter Rohdichte.

Dadurch, daß Wasser in möglichst geringer überstöchiometrischer Menge verwendet wird, - die Einstellung eines Ausbreitmaßes analog zu DIN 1164, das 20 cm oder etwas größer ist, bei höchstens 1,5-facher stöchiometrischer Wassermenge wird bevorzugt - sind in den die Luftporen im Endprodukt umschließenden Stegen kaum Wasserporen vorhanden, die die Festigkeit beeinträchtigen könnten. Außerdem wird hierdurch ein Trocknen nach dem Entformen, falls überhaupt notwendig, auf ein Minimum reduziert.

Calciumsulfat-Betahalbhydrat kann in einer Menge bis zu etwa 30 Gew.-%, vorzugsweise 5 bis 20 Gew.-%, bezogen auf Calciumsulfat-Alphahalbhydrat eingesetzt werden. Da das Calciumsulfat-Betahalbhydrat sehr feinteilig ist, unterstützt es die Sämigkeit der gebildeten Aufschlämmung und dient bei gröberem Calciumsulfat-Alphahalbhydrat (zum unteren Grenzwert der spezifischen Oberfläche hin) zum Stabilisieren der Aufschlämmung.

Wenn man einen vorgefertigten Tensidschaum mit gröberen Poren einsetzt, kann auch Calciumsulfat-Alphahalbhydrat mit gröberer Körnung eingesetzt werden, ohne daß die Schaumporen zerdrückt werden und Sedimentionserscheinungen auftreten. Feinere Schaumporen verlangen eine feinere Körnung des Calciumsulfat-Alphahalbhydrats. Zweckmäßig ist ein Tensidschaum mit einer gleichmäßigen, d.h. nur einen geringen Schwankungsbereich aufweisenden Porengröße im Bereich von 100 bis 500 µm, insbesondere 150 bis 200 µm. Als Tensid kommt beispielsweise Natriumdodecylsulfat infrage. Der Schaum wird zweckmäßigerweise mittels einer Schaumkanone bei einem bestimmten Wasser-Tensid-Luft-Verhältnis und einer bestimmten Schaumstrecke hergestellt, so daß sich eine im wesentlichen gleichmäßige Porengröße ergibt.

Als Additive kommen Magerungs-, Füll-, Farbstoffe, Netzmittel und/oder Zusatzstoffe infrage.

Bei der Herstellung der Gipsbaustoffe anfallender Verschnitt und Schleifstaub kann für die Herstellung der Aufschlämmung wiederverwendet werden.

Die Aufschlämmung kann sowohl kontinuierlich zu einem in seiner Längsrichtung transportierten Strang, der nach entsprechender Verfestigung zerschnitten wird, ver- oder in Formen gegossen werden. Die Aufschlämmung kann vor dem Vergießen mit einem die Erstarrungscharakteristik steuernden Zusatz aus Beschleuniger(n) und/oder Verzögerer(n) gemischt werden.

Für tragende Bauteile ist es je nach Anwendungszweck zweckmäßig, bis etwa 90 Gew.-% Gips, d.h. Calciumsulfat-Alpha- und gegebenenfalls -Betahalbhydrat, durch einen Ersatzstoff in Form von gemahlenem Hüttensand und/oder Braunkohle- und/oder Steinkohle- und/oder Wirbelschichtasche zu ersetzen, wobei die Ersatzstoffe vorzugsweise eine spezifische Oberfläche nach Blaine größer 3000 cm²/g aufweisen. Der Hüttensand bzw. die Asche können auch zusammen mit Quarzmehl eingesetzt werden. Insbesondere wird dann zum Alkalisieren der Aufschlämmung ein Kalkträger in Form von Kalkhydrat, Portlandzement o. dgl. in geringer Menge, vorzugsweise in einer Menge von 3 bis 15 Gew.-% zugesetzt, der zur entsprechenden Reaktionsfähigkeit des gemahlenen Hüttensandes bzw. der Asche beiträgt.

So läßt sich vorzugsweise 10 bis 25 Gew.-% Calciumsulfat-Alphahalbhydrat zusammen mit 90 bis 75 Gew.-% gemahlenem Hüttensand bzw. Asche und gegebenenfalls Quarzmehl und Kalkhydrat, letzteres in einer zusätzlichen Menge von 3 bis 15 Gew.-%, zur Herstellung von Rohlingen verwenden, die durch das Calciumsulfat-Alphahalbhydrat ihre Frühfestigkeit erlangen, so daß sie manipulierbar und damit stapelbar, transportfähig und in einen Autoklaven einbringbar sind, wo sie einer Sattdampfbehandlung unter einem Druck von bis zu 16 bar und einer Temperatur bis zu etwa 200°C während 4 bis 8h ausgesetzt werden, so daß sich Calciumhydrosilikatphasen bilden, die die Endfestigkeit liefern.

Auch können 100 Gew.-Teile Gips zusammen mit bis zu 120 Gew.-Teilen Zusatzstoffen gegebenenfalls zusammen mit einem Kalkträger verwendet werden. Hierbei ist dann eine Warmbehandlung des entformten Gipsbaustoffes zweckmäßig, bei der der Gipsbaustoff einer Sattdampfbehandlung unter Atmosphärendruck insbesondere bei ca. 70 bis 100°C während 4 bis 8h, einer Autoklavbehandlung insbesondere während 4 bis 8h bei einer Temperatur bis ca. 140°C oder der Einwirkung einer durch ein Hochfrequenzfeld erzeugten Erwärmung insbesondere im Bereich von ca. 70 bis 100°C ausgesetzt wird.

Im allgemeinen ist es zweckmäßig, den entformten Gipsbaustoff bei einem Gewichtsverhältnis von Gips zu Ersatzstoff unter etwa 50:50 einer der drei vorgenannten Warmbehandlungen und über etwa 50:50 einer Autoklavbehandlung unter einem Druck bis etwa 16 bar und einer Temperatur bis etwa 200°C während 4 bis 8h zu unterwerfen.

Gegebenenfalls lassen sich auch gemahlener Bims und/oder Trass in Verbindung mit Kalkträgern, etwa Kalkhydrat, einsetzen. Auch diese werden ebenso wie die erwähnten Aschen insbesondere mit der für Hüttensand angegebenen spezifischen Oberfläche eingesetzt.

Die Erfindung wird nachstehend anhand der beigefügten Abbildungen näher erläutert.

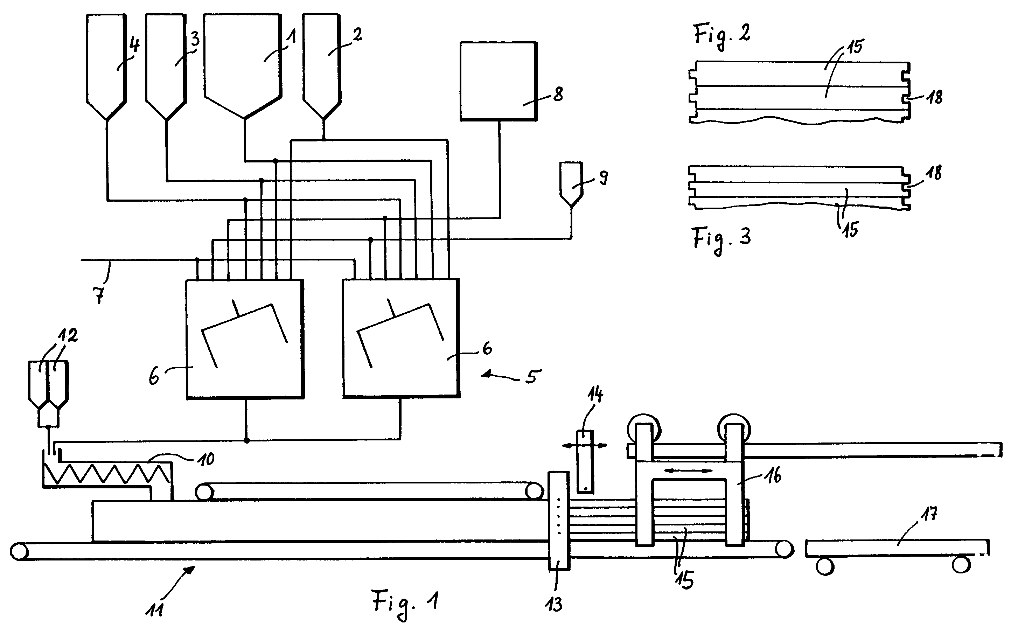

Fig. 1 zeigt schematisch eine Anlage zur Durchführung des Verfahrens zum Herstellen von Wandbauplatten.

Fig. 2 und 3 zeigen ausschnittweise zwei mögliche Ausführungen von Seitenkanten der mit der Anlage von Fig. 1 hergestellten Wandbauplatten.

Die dargestellte Anlage umfaßt einen Vorratsbehälter 1 für Calciumsulfat-Alphahalbhydrat mit einer spezifischen Oberfläche größer 2000 cm²/g nach Blaine, einen Vorratsbehälter 2 für Calciumsulfat-Betahalbhydrat, einen Vorratsbehälter 3 für gemahlenen Hüttensand und einen Vorratsbehälter 4 für hydraulisch reaktive Asche. Die Vorratsbehälter 1 bis 4 sind über entsprechende Leitungen mit einem Tandem-Mischer 5 (stattdessen kann auch ein Mischer mit nachgeschaltetem Vorratsbehälter für die zu vergießende geschäumte Mischung verwendet werden) verbunden, dessen Mischeinheiten 6 alternierend arbeiten. Den Mischeinheiten 6 wird Wasser über eine Leitung 7 zugeführt, außerdem sind sie mit einer Schaumkanone 8 zur Erzeugung eines Tensidschaum mit im wesentlichen gleichmäßiger, vorbestimmter Porengröße und vorbestimmter Rohdichte verbunden. Zusätzlich kann ein Verzögerer für Gips aus einem entsprechenden Vorratsbehälter 9 in die jeweilige Mischereinheit 6 gegeben werden.

Wasser in etwas überstöchiometrischer Menge wird in eine Mischereinheit 6 zusammen mit einer vorbestimmten Menge Verzögerer gegeben, wonach vorbestimmte Mengen an Feststoffen aus den Vorratsbehältern 1 bis 4 zugegeben und miteinander zu einer Aufschlämmung vermischt werden. Schließlich erfolgt das Zumischen einer vorbestimmten Menge Tensidschaum aus der Schaumkanone 8. Die fertige Mischung wird über einen Förderer 10, beispielsweise einen Schneckenförderer, in einen Kanal einer mit entsprechenden Förderbändern gebildeten Stranganlage 11 gefördert. Am Eingang des Förderers 10 kann ein aus einem oder mehreren Beschleunigern und/oder einem oder mehreren Verzögerern für die Mischung bestehender Zusatz zum Steuern der Erstarrungscharakteristik der Mischung aus entsprechenden Vorratsbehältern 12 feindosiert zugegeben werden. Der durch das Eingießen in den Kanal gebildete Strang wird in seiner Längsrichtung gefördert und am Ende des Kanals, wo er eine ausreichende Festigkeit erreicht hat, durch eine Trenneinrichtung 13 horizontal zerschnitten. Eine in Strangförderrichtung mitlaufende und zu einer Ausgangsposition zurückführbare Schneideinrichtung 14 dient zum vertikalen Durchtrennen des austretenden Strangs in einen Stapel von Platten 15, der anschließend von einem Übersetzer 16 ergriffen und auf einen Wagen 17 abgesetzt wird. Jenachdem, ob Hüttensand und/oder Asche zur Herstellung verwendet wurde oder nicht, werden die Stapel auf den Wagen 17 einer entsprechenden Nachbehandlung zugeführt und/oder gegebenenfalls nach vorherigem Schleifen verpackt.

Gleichzeitig mit dem horizontalen Trennen des verfestigten, noch nicht voll ausgehärteten Strangs können seitlich entsprechende Nuten 18 eingefräst werden, so daß die Wandbauplatten 14 über einen Nut-/Federeingriff o.dgl. zusammensetzbar sind.

## Patentansprüche

1. Verfahren zum Herstellen von leichtgewichtigen, mit einer Porenstruktur versehenen, platten- oder blockförmigen Gipsbaustoffen, insbesondere Wandbauplatten, wobei Calciumsulfat-Alphahalbhydrat, Wasser in einer etwas überstöchiometrischen Menge und gegebenenfalls Abbindeverzögerer und/oder -beschleuniger für Gips und Additive unter Bildung einer gießfähigen Aufschlämmung gemischt und einer geeigneten Formgebung unterworfen werden, dadurch **gekennzeichnet**, daß gemahlenes Calciumsulfat-Alphahalbhydrat mit einer spezifischen Oberfläche nach Blaine größer 2000 cm²/g, gegebenenfalls zusammen mit Calciumsulfat-Betahalbhydrat in einer Menge bis etwa 30 Gew.-% bezogen auf das Calciumsulfat-Alphahalbhydrat sowie ein vorgefertigter Tensidschaum mit einer definierten Rohdichte im Bereich von 40 bis 80 kg/m³ und mit gleichmäßiger, definierter Porengröße im Bereich von 100 bis 500 µm,
der der Aufschlämmung vor der Formgebung in einer Menge zur Einstellung einer definierten Rohdichte des Gipsbaustoffs im Bereich von 300 bis 1200 kg/m³, beigemischt wird, zur Herstellung der faserfreien Aufschlämmung verwendet werden.

2. Verfahren nach Anspruch 1, dadurch gekennzeichnet, daß der Tensidschaum mit einer Schaumkanone bei einem bestimmten Wasser-Tensid-Luft-Verhältnis und einer bestimmten Schäumstrecke hergestellt wird.

3. Verfahren nach Anspruch 1 oder 2, dadurch gekennzeichnet, daß Wasser bis zur 1,5-fachen stöchiometrischen Menge so verwendet wird, daß die den Tensidschaum enthaltende Aufschlämmung ein Ausbreitmaß analog DIN 1164, das 20 cm oder etwas größer ist, zeigt.

4. Verfahren nach einem der Ansprüche 1 bis 3, dadurch gekennzeichnet, daß die Aufschlämmung kontinuierlich zu einem in seiner Längsrichtung transportierten Strang vergossen wird, der nach entsprechender Verfestigung zerschnitten wird.

5. Verfahren nach einem der Ansprüche 1 bis 3, dadurch gekennzeichnet, daß die Aufschlämmung in Formen gegossen wird.

6. Verfahren nach Anspruch 4 oder 5, dadurch gekennzeichnet, daß die Aufschlämmung vor dem Vergießen mit einem die Erstarrungscharakteristik steuernden Zusatz aus Beschleuniger(n) und/oder Verzögerer(n) gemischt wird.

7. Verfahren nach einem der Ansprüche 1 bis 6, dadurch gekennzeichnet, daß Verschnitt und Schleifstaub für die Herstellung der Aufschlämmung wiederverwendet werden.

8. Verfahren nach einem der Ansprüche 1 bis 7, dadurch gekennzeichnet, daß der entformte Gipsbaustoff getrocknet wird.

9. Verfahren nach einem der Ansprüche 1 bis 7, dadurch gekennzeichnet, daß bis etwa 90 Gew.-% Gips (Alpha- und gegebenenfalls Betahalbhydrat) durch einen Ersatzstoff in Form von gemahlenem Hüttensand und/oder Braunkohle- und/oder Steinkohle- und/oder Wirbelschichtasche gegebenenfalls zusammen mit Quarzmehl ersetzt wird.

10. Verfahren nach Anspruch 9, dadurch gekennzeichnet, daß der Ersatzstoff eine spezifische Oberfläche nach Blaine größer 3000 cm²/g aufweist.

11. Verfahren nach Anspruch 9 oder 10, dadurch gekennzeichnet, daß 10 bis 25 Gew.-% Gips und Rest Ersatzstoff(e) verwendet werden.

12. Verfahren nach einem der Ansprüche 9 bis 11, dadurch gekennzeichnet, daß ein Kalkträger in Form von Kalkhydrat, Portlandzement o.dgl. in geringer Menge, vorzugsweise in einer Menge von 3 bis 15 Gew.-% zugesetzt wird.

13. Verfahren nach einem der Ansprüche 9 bis 12, dadurch gekennzeichnet, daß der entformte Gipsbaustoff einer Warmbehandlung unterworfen wird.

14. Verfahren nach Anspruch 13, dadurch gekennzeichnet, daß der entformte Gipsbaustoff einer Sattdampfbehandlung unterworfen wird.

15. Verfahren nach Anspruch 14, dadurch gekennzeichnet, daß der entformte Gipsbaustoff bei einem Gewichtsverhältnis von Gips zu Ersatzstoff unter etwa 50:50 einer Sattdampfbehandlung unter Atmosphärendruck bei 70 bis 100°C während 4 bis 8h unterworfen wird.

16. Verfahren nach Anspruch 14, dadurch gekennzeichnet, daß der entformte Gipsbaustoff bei einem Gewichtsverhältnis von Gips zu Ersatzstoff über etwa 50:50 einer Autoklavbehandlung unter einem Druck bis zu etwa 16 bar und einer Temperatur bis zu etwa 200°C während 4 bis 8h unterworfen wird.

17. Verfahren nach Anspruch 13, dadurch gekennzeichnet, daß der entformte Gipsbaustoff einer Erwärmung, insbesondere zwischen ca. 70 bis 100°C, durch Einwirkung eines Hochfrequenzfeldes ausgesetzt wird.

18. Verfahren nach einem der Ansprüche 1 bis 17, dadurch gekennzeichnet, daß ein Calciumsulfat-Alphahalbhydrat mit einer spezifischen Oberfläche nach Blaine von etwa 3000 bis 4000 cm²/g verwendet wird.

19. Verfahren nach einem der Ansprüche 1 bis 18, dadurch gekennzeichnet, daß Calciumsulfat-Betahalbhydrat in einer Menge von 5 bis 20 Gew.-% bezogen auf das Calciumsulfat-Alphahalbhydrat verwendet wird.

20. Verfahren nach einem der Ansprüche 1 bis 19, dadurch gekennzeichnet, daß ein Tensidschaum mit einer definierten Porengröße im Bereich von 150 bis 200 µm verwendet wird.

21. Verfahren nach einem der Ansprüche 1 bis 20, dadurch gekennzeichnet, daß eine definierte Rohdichte im Bereich vom 400 bis 800 kg/m³, insbesondere 500 bis 600 kg/m³, eingestellt wird.

## Claims

1. Process for producing light-weight, tabular or block-shaped plaster building materials provided with a pore structure, in particular wall boards, in which calcium sulphate alpha-hemihydrate, water in a somewhat superstoichiometric amount and optionally setting retardants and/or accelerators for plaster and additives are mixed to form a castable slurry and are subjected to a suitable shaping process, characterized in that milled calcium sulphate alpha-hemihydrate having a Blaine specific surface area greater than 2000 cm²/g, optionally together with calcium sulphate beta-hemihydrate in an amount of up to about 30% by weight, based on the calcium sulphate alpha-hemihydrate, and also a prepared surfactant foam having a defined bulk density in the range from 40 to 80 kg/m³ and having a uniform, defined pore size in the range from 100 to 500 µm which is mixed into the slurry prior to shaping in an amount to set a defined bulk density of the plaster building material in the range from 300 to 1200 kg/m³, are used to produce the fibre-free slurry.

2. Process according to Claim 1, characterized in that the surfactant foam is produced with a foam gun at a particular water/surfactant/air ratio and a particular foaming path.

3. Process according to Claim 1 or 2, characterized in that water in an amount of up to 1.5 times the stoichiometric amount is used in such a way that the slurry containing the surfactant foam has a spreading dimension in accordance with DIN 1164 which is 20 cm or somewhat larger.

4. Process according to one of Claims 1 to 3, characterized in that the slurry is continuously cast to give a strip transported in its longitudinal direction, which strip is cut up after appropriate solidification.

5. Process according to one of Claims 1 to 3, characterized in that the slurry is cast into moulds.

6. Process according to Claim 4 or 5, characterized in that prior to casting, the slurry is mixed with an additive which controls the solidification characteristics and comprises accelerator(s) and/or retardant(s).

7. Process according to one of Claims 1 to 6, characterized in that the cutting and grinding dust is reused for the production of the slurry.

8. Process according to one of Claims 1 to 7, characterized in that the plaster building material removed from the mould is dried.

9. Process according to one of Claims 1 to 7, characterized in that up to about 90% by weight of plaster (alpha- and optionally beta-hemihydrate) is replaced by a substitute material in the form of milled slag sand and/or brown coal and/or bituminous coal and/or fluidized-bed ash, optionally together with quartz flour.

10. Process according to Claim 9, characterized in that the substitute material has a Blaine specific surface area greater than 3000 cm²/g.

11. Process according to Claim 9 or 10, characterized in that from 10 to 25% by weight of plaster is used, the remainder being substitute material(s).

12. Process according to one of Claims 9 to 11, characterized in that a lime-containing material in the form of calcium hydroxide, portland cement or the like is added in a small amount, preferably in an amount from 3 to 15% by weight.

13. Process according to one of Claims 9 to 12, characterized in that the plaster building material removed from the mould is subjected to heat treatment.

14. Process according to Claim 13, characterized in that the plaster building material removed from the mould is subjected to a treatment with saturated steam.

15. Process according to Claim 14, characterized in that the plaster building material removed from the mould and having a weight ratio of plaster to substitute material below about 50:50 is subjected to a treatment with saturated steam under atmospheric pressure at from 70 to 100°C for from 4 to 8 h.

16. Process according to Claim 14, characterized in that the plaster building material removed from the mould and having a weight ratio of plaster to substitute material above about 50:50 is subjected to an autoclave treatment under a pressure of up to about 16 bar and a temperature of up to about 200°C for from 4 to 8 h.

17. Process according to Claim 13, characterized in that the plaster building material removed from the mould is subjected to heating, in particular between about 70 and 100°C, by action of a high-frequency field.

18. Process according to one of Claims 1 to 17, characterized in that a calcium sulphate alpha-hemihydrate having a Blaine specific surface area of from about 3000 to 4000 cm²/g is used.

19. Process according to one of Claims 1 to 18, characterized in that calcium sulphate beta-hemihydrate is used in an amount of from 5 to 20% by weight based on the calcium sulphate alpha-hemihydrate.

20. Process according to one of Claims 1 to 19, characterized in that a surfactant foam having a defined pore size in the range from 150 to 200 µm is used.

21. Process according to one of Claims 1 to 20, characterized in that a defined bulk density in the range from 400 to 800 kg/m³, in particular from 500 to 600 kg/m³, is set.

## Revendications

1. Procédé de fabrication de matériaux de construction à base de plâtre, en forme de plaques ou de blocs, légers, pourvus d'une structure poreuse, en particulier des carreaux pour parois, dans lequel du sulfate de calcium alpha semi-hydrate, de l'eau en quantité quelque peu surstoechiométrique et éventuellement du retardateur et/ou de l'accélérateur de prise pour plâtre et des additifs sont mélangés pour formation d'une suspension susceptible d'être coulée et sont soumis à une mise en forme appropriée, caractérisé en ce que l'on utilise, pour former une suspension sans fibres, du sulfate de calcium alpha semi-hydrate broyé d'une surface spécifique Blaine plus grande que 2.000 cm²/g, éventuellement avec du sulfate de calcium béta semi-hydrate dans une proportion allant jusqu'à environ 30 % en poids par rapport au sulfate de calcium alpha semi-hydrate, ainsi qu'une mousse tensio-active préfabriquée d'une masse volumique brute définie dans une plage allant de 40 à 80 kg/m³ et d'une taille de pore constante définie dans une plage allant de 100 à 500 micromètres, laquelle est mélangée à la suspension avant la mise en forme avec une quantité pour ajuster la masse volumique brute du matériau de construction à base de plâtre définie dans une plage allant de 300 à 1.200 kg/m³.

2. Procédé selon la revendication 1, caractérisé en ce que la mousse tensio-active est produite au moyen d'un canon à mousse par une proportion eau/tensio-actif/air déterminée et d'un parcours déterminé de la mousse.

3. Procédé selon la revendication 1 ou 2, caractérisé en ce que l'eau est utilisée jusqu'à 1,5 fois la quantité stoechiométrique, de telle façon que la suspension contenant la mousse tensio-active présente une mesure de propagation analogue à DIN 1164, de 20 cm ou quelque peu plus grande.

4. Procédé selon l'une des revendications 1 à 3, caractérisé en ce que la suspension est coulée de façon continue en un boudin dêplacé longitudinalement, lequel est découpé après une solidification appropriée.

5. Procédé selon l'une des revendications 1 à 3, caractérisé en ce que la suspension est coulée dans des moules.

6. Procédé selon la revendication 4 ou 5, caractérisé en ce que la suspension est mélangée avant la coulée avec un additif à base d'accélérateur(s) et/ou de retardateur(s) de prise contrôlant les caractéristiques de prise.

7. Procédé selon l'une des revendications 1 à 6, caractérisé en ce que les découpures et les poussières de ponçage sont réutilisées pour la préparation de la suspension.

8. Procédé selon l'une de revendications 1 à 7, caractérisé en ce que le matériau de construction à base de plâtre démoulé est séché.

9. Procédé selon l'une des revendications 1 à 7, caractérisé en ce que jusqu'à environ 90 % en poids de plâtre (alpha semi-hydrate et éventuellement béta semi-hydrate) est remplacé par un matériau de substitution formé de sable de laitier broyé et/ou de cendres de lignite et/ou de houille et/ou de lit fluidisé, avec éventuellement de la poudre de quartz.

10. Procédé selon la revendication 9, caractérisé en ce que le matériau de substitution présente une surface spécifique Blaine plus grande que 3.000 cm²/g.

11. Procédé selon la revendication 9 ou 10, caractérisé en ce que l'on utilise de 10 à 25 % de plâtre et le complément en matériau(x) de substitution.

12. Procédé selon l'une des revendications 9 à 11, caractérisé en ce que l'on ajoute en petite quantité un porteur calcaire sous forme d'hydroxyde de calcium, de ciment Portland ou similaires, de préférence dans une quantité allant de 3 à 15 % en poids.

13. Procédé selon l'une des revendications 9 à 12, caractérisé en ce que le matériau de construction à base de plâtre démoulé est soumis à un traitement à chaud.

14. Procédé selon la revendication 13, caractérisé en ce que le matériau de construction à base de plâtre démoulé est soumis à un traitement par de la vapeur saturée.

15. Procédé selon la revendication 14, caractérisé en ce que le matériau de construction à base de plâtre démoulé est soumis, pour un rapport du poids de plâtre au matériau de substitution en dessous d'environ 50:50, à un traitement par de la vapeur saturée sous pression atmosphérique, de 70° à 100°C pendant 4 à 8 heures.

16. Procédé selon la revendication 14, caractérisé en ce que le matériau de construction à base de plâtre démoulé est soumis, pour un rapport du poids de plâtre au matériau de substitution au-dessus d'environ 50:50, à un traitement en autoclave sous une pression allant jusqu'à environ 16 bars et une température allant jusqu'à environ 200°C pendant 4 à 8 heures.

17. Procédé selon la revendication 13, caractérisé en ce que le matériau de construction à base de plâtre démoulé est exposé à un chauffage par l'action d'un champ haute fréquence, en particulier entre environ 70° à 100°C.

18. Procédé selon l'une de revendications 1 à 17, caractérisé en ce que l'on utilise un sulfate de calcium alpha semi-hydrate d'une surface spécifique Blaine allant d'environ 3.000 à 4.000 cm²/g.

19. Procédé selon l'une des revendications 1 à 18, caractérisé en ce que l'on utilise du sulfate de calcium béta semi-hydrate dans une proportion allant de 5 à 20 % en poids par rapport au sulfate de calcium alpha semi-hydrate.

20. Procédé selon l'une des revendications 1 à 19, caractérisé en ce que l'on utilise une mousse tensio-active d'une taille de pore définie dans une plage allant de 150 à 200 micromètres.

21. Procédé selon l'une des revendications 1 à 20, caractérisé en ce qu'on ajuste la masse volumique brute définie dans une plage allant de 400 à 800 kg/m³, en particulier de 500 à 600 kg/m³.
